# EUROPÄISCHE PATENTSCHRIFT

(11) **EP 0 544 194 B1**
(45) Veröffentlichungstag und Bekanntmachung des Hinweises auf die Patenterteilung: **09.08.1995**
(21) Anmeldenummer: 92119788.5
(22) Anmeldetag: 20.11.1992
(51) Int. Cl.: F16B 15/04

(54) **Verfahren zur Herstellung eines Gasbetonnagels**
Method of manufacturing a nail for porous concrete
Procédé pour la fabrication d'un clou pour béton cellulaire

(30) Priorität: 27.11.1991 DE 4138955
(43) Veröffentlichungstag der Anmeldung: 02.06.1993
(73) Patentinhaber: Tumalski, Tadeusz, D-60439 Frankfurt (DE)
(72) Erfinder: Tumalski, Tadeusz, D-60439 Frankfurt (DE)

(56) Entgegenhaltungen:
- EP-A- 0 229 212
- DE-A- 1 625 348
- DE-C- 876 341
- DE-C- 3 838 015
- US-A- 2 150 788
- US-A- 4 533 288

## Beschreibung

Die Erfindung betrifft ein Verfahren zur Herstellung eines Gasbetonnagels bestehend aus einem Nagelkörper und einer Spaltungsscheibe.

Aus DE-A-1625348 ist ein Spreiznagel bekannt, der aus einem Profildraht besteht. Dieser Profildraht ist in der Mitte geknickt und die Seiten sind aufeinander gelegt. Eine gelochte Scheibe als eine ringförmige Rondelle ausgebildet, hält den Schaft zusammen. Zwischen den Abschrägungen der Spitze des Schaftes ist ein Keilstück eingefügt, das sich beim Eintreiben des Nagels ins Material zwischen die Schafthälften drängt. Da aber das Keilstück mit Wirkung dieser Kräfte, die die Schafthälften spreizen und im Material verankern sollen, tief ins Material gedrückt wird, kommt der Spreizungseffekt nicht zustande, was ein Nachteil dieses Nagels darstellt.

Aus EP-A-0229212 ist ein Gasbetonnagel bekannt, bei dem der Spreizungsteil des Öffners in einem festen Abstand zur Scheibenfläche steht.

Trotz großer Kompliziertheit bestehen die Mängel dieses Nagels darin, daß zum einen durch den Spalt (24) des Nagelkörpers ein Teil des Querschnitts - also auch der Belastbarkeit - verlorengeht; zum anderen erfolgt der Spreizungseffekt nur durch die Spitzen des gekeilten Endes des Öffners, was bei leichtem Abrutschen der Nagelhälften von den Spitzen den Spreizungseffekt des Öffners außer Kraft setzt.

Der Erfindung liegt die Aufgabe zugrunde, die Nachteile zu vermeinden und ein Verfahren zur Herstellung eines Gasbetonnagels zu schaffen, das einfach durchzuführen und kostengünstig ist.

Die Lösung des Verfahrens wird mit den kennzeichnenden Merkmalen des Anspruchs 1 erzielt. Der aus halbrundem Profildraht hergestellte Nagelkörper wird durch die Spaltungsscheibe durchgeschlagen. Der Querbalken (6) drückt die Schafthälften des Nagels auseinander. Gleichzeitig hält die kreisförmige Öffnung mit dem Durchmesser 0 den Schaft im Abstand b von dem Querbalken zusammen. Dadurch entsteht ein Kraftmoment, das die beiden Schafthälften - unabhängig von der Mitwirkung des Untergrundes - verbiegt.

Der Radius der Verbiegung wird von den Maßen a, b, 0 und von den Materialeigenschaften des Nagelkörpers bestimmt.

Weitere vorteilhafte Ausgestaltungen für den Kopf und den Schaft des Gasbetonnagels ergeben sich aus den Unteransprüchen 2-7 und sind auf den Zeichnungen wiedergegeben wie folgt:
Fig. 1
   Ein Ausführungsbeispiel des neu entwickelten Gasbetonnagels, wo mit Hilfe des nach den Ansprüchen 1-3 angefertigten Gasbetonnagels auf dem Gasbeton ein Gewindebolzen montiert ist.
Fig. 2
   Zeigt die Einzelheiten der Spaltungsscheibe (7) mit dem Querbalken (6) der Breite a, der aus der Fläche der Scheibe auf das Maß b herausgedrückt wird. Die Maße a und b bestimmen die Bieg-Hebel-Wirkung der Spaltungsscheibe und dadurch auch den Radius der Verankerung.
Fig. 3
   Hier werden die Merkmale des Nagelkörpers verdeutlicht:
   - der halbrunde Querschnitt des zur Herstellung des Nagels benutzten Metallstabes
   - der Kopf (1) des Nagels
   - die Querrillen (2), die die Belastbarkeit des Nagels im Gasbeton wesentlich vergrößern
   - die vorteilhafte Ausgestaltung der Spitzen, die die Benutzung des Nagels in Verbindung mit der Spaltungsscheibe erleichtert.
Fig. 4
   Ein mit dem Nagelkörper fest verbundener Gewindebolzen (3), der es ermöglicht in Verbindung mit der Spaltungsscheibe lösbare Befestigungen der Konstruktionsteile an einer Gasbetonwand anzubringen. Der Durchmesser des Gewindes ist nur allgemein mit M-... angegeben.
Fig. 5
   Eine mit dem Kopf des Nagels fest verbundene Gewindehülse (4). Die Hülse kann auch bündig mit der Wandfläche montiert werden, was eine lösbare Verbindung mit Hilfe der metrischen Schrauben ergibt. Da auch hier verschiedene Gewindegrößen anwendbar sind, ist das Gewinde nur allgemein mit M-... angegeben.
Fig. 6
   Ein Gasbetonnagel mit in einen Haken geformten Kopf. Der Kopf bleibt beim Hineinschlagen des Nagels in einem bestimmten Abstand von der Wand und ergibt eine Einhängemöglichkeit der Konstruktionsteile.
Fig. 7
   Ein Gasbetonnagel mit einer Rohrschelle, die an dem Nagelkopf fest angebracht ist. Die Rohrschelle kann mit Hilfe des Gasbetonnagels in beliebigem Abstand von der Wand angebracht werden, wobei der Nagel nicht ganz in den Gasbeton hineingeschlagen wird. Diese Ausgestaltung ermöglicht die Montage der Rohrleitungen an einer Gasbetonwand.

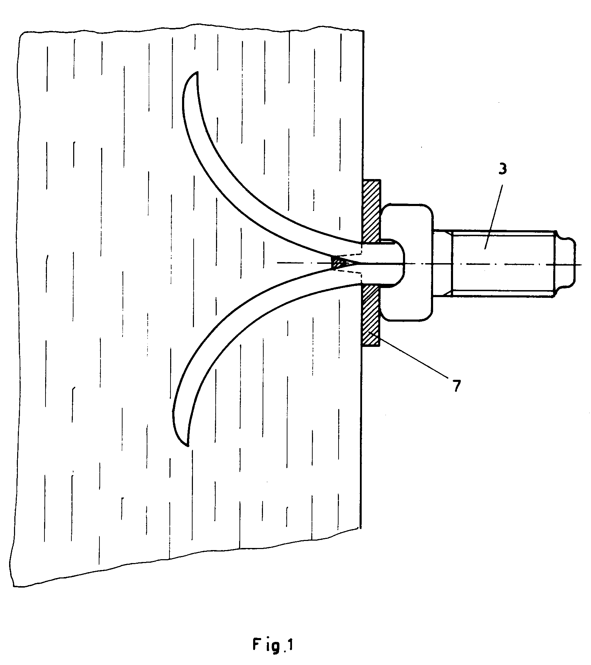

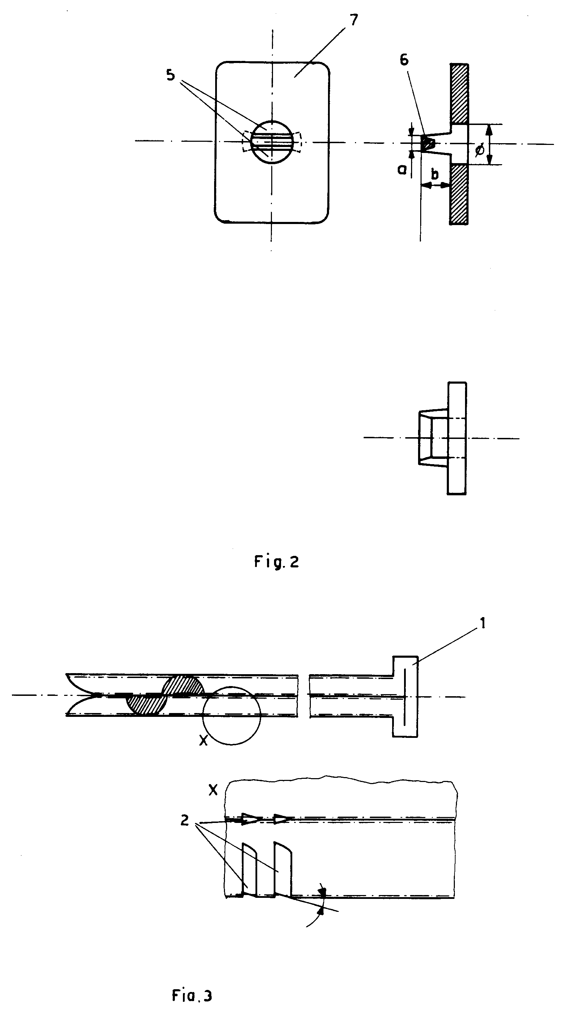

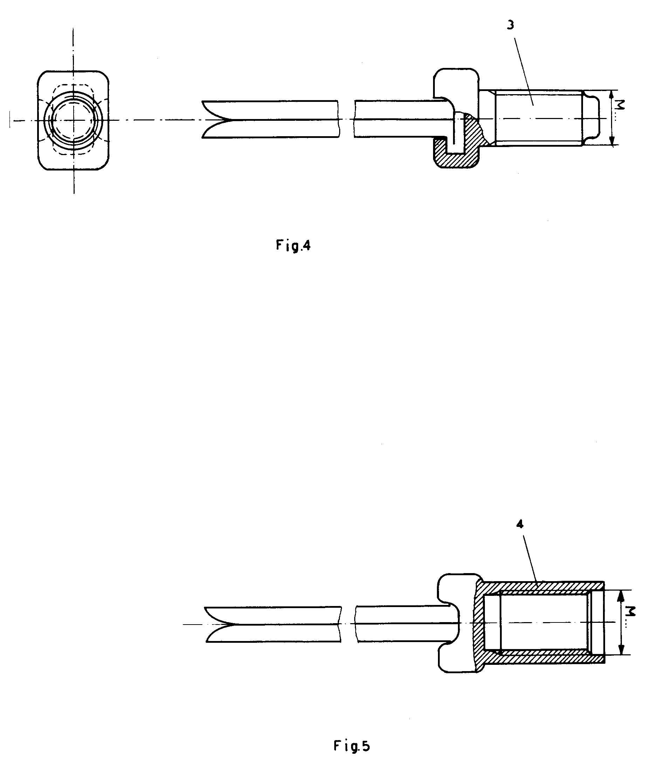

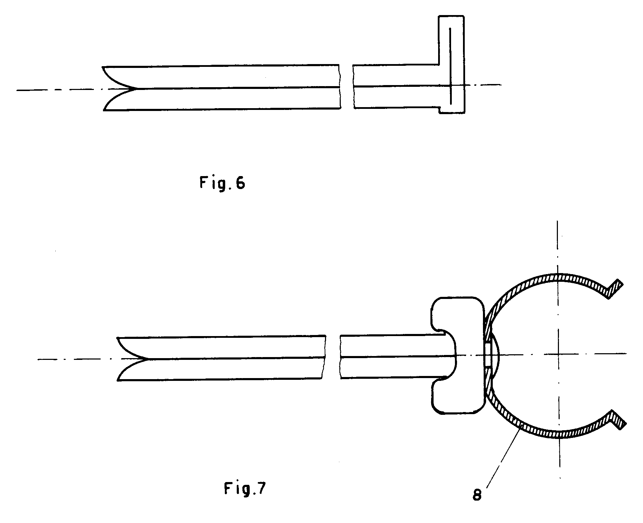

## Patentansprüche

1. Verfahren zur Herstellung eines Gasbetonnagels bestehend aus einem Nagelkörper und einer Spaltungsscheibe, bei dem zur Herstellung des Nagelkörpers ein halbrunder Metallstab in der Mitte geknickt wird, so daß die Knickstelle den Nagelkopf ergibt und die flachen Seiten so aufeinandergelegt werden, daß die Spitzen auseinanderstehen,
dadurch gekennzeichnet, daß die Spaltungsscheibe (7) aus Metall in der Weise hergestellt wird, daß zwei in einem Kreis liegende halbrunde, durch einen Querbalken (6) der Breite a getrennte Öffnungen (5) gestanzt werden und der Querbalken aus der Scheibenfläche so herausgedrückt wird, daß der vorgegebene Abstand b eingestellt wird.

2. Verfahren nach Anspruch 1, dadurch gekennzeichnet, daß die Knickstelle des Metallstabs so in einen Kopf (1) verformt wird, daß er eine größere Fläche als die Querschnittsfläche des Nagelschaftes aufweist.

3. Verfahren nach Anspruch 1, dadurch gekennzeichnet, daß der Kopf des Nagels fest mit einem Bolzen (3) mit Außengewinde verbunden wird.

4. Verfahren nach Anspruch 1, dadurch gekennzeichnet, daß der Kopf des Nagels fest mit einer Hülse (4) mit Innengewinde verbunden wird.

5. Verfahren nach Anspruch 1, dadurch gekennzeichnet, daß der Kopf des Nagels in einen Haken geformt wird.

6. Verfahren nach Anspruch 1, dadurch gekennzeichnt, daß der Kopf des Nagels fest mit einer Rohrschelle (8) verbunden wird.

7. Verfahren nach einem der vorhergehenden Ansprüche, dadurch gekennzeichnet, daß in den Metallstab auf beiden Seiten quer zur Längsachse liegenden Rillen (2) eingebracht werden.

## Claims

1. Manufacturing procedure for a nail for foamed concrete consisting of a nail body and a splitting washer; for manufacturing the nail body a half-round metal bar is buckled in the middle with the buckling serving as the nail head and the flat ends being placed on each other so that the tips are showing in different directions; characterized by a metal splitting washer (7) manufactured in a way that two half-round openings (5) in a circle separated from each other by a cross bar (6) are punched out and the cross bar is pressed out of the washer surface so that the given distance b is adjusted.

2. Procedure according to claim 1; characterized by the buckling of the metal rod being shaped into a head (1) so that it exhibits a greater surface than the cross section of the nail shank.

3. Procedure according to claim 1; characterized by the nail head being closely connected with a bolt (3) furnished with an outer thread.

4. Procedure according to claim 1; characterized by the nail head being closely connected with a case (4) furnished with an inner thread.

5. Procedure according to claim 1; characterized by a hook-shaped nail head.

6. Procedure according to claim 1; characterized by the nail head being closely connected with a pipe clamp (8).

7. Procedure according to one of the previous claims; characterized by grooves (2) transverse to the longitudinal axis of the metal rod on both sides.

## Revendications

1. Procédé pour la fabrication d'un clou pour béton-gaz composé d'un corps de clou et d'un disque de fendage pendant lequel une tige métallique demi-ronde est pliée au milieu pour former le corps de clou de sorte que le point de flambage fournit la tête de clou et les côtés plats sont posés l'un sur l'autre de la sorte que les pointes s'écartent caractérisé en ce que le disque de fendage (7) en métal est construit de la sorte que deux ouvertures (5) demi-rondes se trouvant dans un cercle séparées par une traverse (6) de la largeur **a** sont découpées et la traverse est pressée de la surface de disque de telle sorte que la distance **b** prédéfinie est réglée.

2. Procédé suivant revendication 1 caractérisé en ce que le point de flambage de la tige métallique est formé comme une tête (1) de telle manière qu'elle montre une plus grande surface que la superficie de la tige de clou.

3. Procédé suivant revendication 1 caractérisé en ce que la tête du clou est reliée étroitement avec un boulon (3) avec filetage.

4. Procédé suivant revendication 1 caractérisé en ce que la tête du clou est reliée étroitement avec une douille (4) avec taraudage.

5. Procédé suivant revendication 1 caractérisé en ce que la tête du clou est formée comme un crochet.

6. Procédé suivant revendication 1 caractérisé en ce que la tête du clou est reliée étroitement avec une bride d'attache (8).

7. Procédé suivant une des revendications précédentes caractérisé en ce que dans la tige métallique des rainures (2) sont placées sur les deux côtés transversalement à l'axe longitudinal.
